# EUROPEAN PATENT APPLICATION

(11) **EP 4 414 873 A1**
(43) Date of publication of application: **14.08.2024**
(21) Application number: 23155655.6
(22) Date of filing: 08.02.2023
(51) Int. Cl.: G06F 21/55, G06F 21/83

(54) **DETECTION OF ULTRASONIC SIGNALS**

(71) Applicant: Nokia Technologies Oy, 02610 Espoo (FI)
(72) Inventor: DEMIREL, Berken Utku, Kirsehir (TR); AL-NAIMI, Khaldoon, Beaconsfield (GB); MONTANARI, Alessandro, Cambridge (GB)
(74) Representative: Nokia EPO representatives

(57) **Abstract**

Example embodiments relate to detection of ultrasonic signals. Example embodiments may comprise an apparatus, method and/or computer program. For example, the method may comprise: providing first data derived from a signal received by a microphone of a user device; providing second data representing mechanical oscillations within a gyroscope of the user device; detecting, based at least in part on the first data and the second data, that the signal received by the microphone comprises an ultrasonic signal; and responsive to the detection, controlling the user device for mitigating one or more events associated with receipt of the ultrasonic signal by the microphone.

## Description

### Field

Example embodiments relate to detection of ultrasonic signals. For example, example embodiments may relate to an apparatus, method and computer program for detecting ultrasonic signals which may be intended to cause an unwanted event or output at a user device.

### Background

An apparatus, such as a user device, may comprise one or more microphones for picking-up audio signals which may then be used for various purposes.

For example, a hearing aid may amplify received audio signals for output via a loudspeaker to help a hearing-impaired wearer to better hear external sounds. For example, an earbud may process received audio signals for active noise cancellation (ANC) and/or for pass-through to a loudspeaker in a so-called transparency mode of operation. For example, a digital assistant may respond to certain utterances in received audio signals to perform certain functions, e.g. playing a music track, retrieving information from a remote web service and/or initiating a call or payment to a remote service.

Receipt of ultrasonic signals by one or more microphones of such an apparatus may be problematic.

### Summary

According to one aspect, there is described an apparatus, the apparatus comprising: means for providing first data derived from a signal received by a microphone of a user device; means for providing second data representing mechanical oscillations within a gyroscope of the user device; means for detecting, based at least in part on the first data and the second data, that the signal received by the microphone comprises an ultrasonic signal; and means, responsive to the detection, for controlling the user device for mitigating one or more events associated with receipt of the ultrasonic signal by the microphone.

The first data may be provided at the output of one or more non-linear components that process the signal received by the microphone.

The detecting means may be configured to detect that the signal received by the microphone comprises an ultrasonic signal based, at least in part, on identifying non-zero values of the first data and the second data for one or more corresponding time instances or time periods.

The detecting means may be configured to perform amplitude envelope correlation using respective waveforms represented by the first data and the second data for generating a first parameter indicative of a similarity between the respective waveforms, and wherein the detection is based, at least in part, on the first parameter.

The detecting means may be configured to perform spectral analysis of frequency domain representations of respective waveforms represented by the first data and the second data for generating a second parameter indicative of similarity between the frequency domain representations, and wherein the detection is based, at least in part, on the second parameter.

The detection may be based, at least in part, on the first and second parameters meeting respective predetermined conditions.

The detecting means may comprise one or more machine-learned models trained using training data comprising predetermined sets of first and second parameters known to be generated responsive to ultrasonic signals being transmitted to the user device, wherein the detection is based on an output of the one or more machine-learned models.

The user device may comprise one of a digital assistant, smartphone, tablet computer, smart speaker, smart glasses, other smart home appliance, head-worn display device, an earphone or a hearing aid.

The user device may comprise an earphone, wherein the microphone is provided on an external part of the earphone and a second microphone is provided on an internal part of the earphone, wherein the apparatus may further comprise: means for providing third data derived from a signal received by the second microphone; and means for determining a third parameter indicative of an energy ratio between waveforms represented by the first and third data, wherein the detection is based, at least in part, on the third parameter and one or both of the first and second parameters.

The detection may be based, at least in part, on the third parameter and one or both of the first and second parameters meeting respective predetermined conditions.

The detecting means may comprise one or more machine-learned models trained using training data comprising predetermined sets of third parameters and one or both of first and second parameters known to be generated responsive to ultrasonic signals being transmitted to the user device, wherein the detection is based on an output of the one or more machine-learned models.

The second data may represent mechanical oscillations with respect to two or more axes of the gyroscope.

The gyroscope may comprise part of an inertial measurement unit, IMU, of the user device.

The controlling means may be configured to perform one or more of:
disabling one or more loudspeakers of the user device;
muting or attenuating an output signal to one or more loudspeakers of the user device, wherein the output signal is derived from at least some of the first data;
disabling a processing function of the user device that receives as input at least some of the first data; and
disabling a transmission function of the user device that transmits at least some of the first data.

The apparatus may comprise the user device.

According to a second aspect, there is described a method, comprising: providing first data derived from a signal received by a microphone of a user device; providing second data representing mechanical oscillations within a gyroscope of the user device; detecting, based at least in part on the first data and the second data, that the signal received by the microphone comprises an ultrasonic signal; and responsive to the detection, controlling the user device for mitigating one or more events associated with receipt of the ultrasonic signal by the microphone.

The first data may be provided at the output of one or more non-linear components that process the signal received by the microphone.

The detecting may comprise detecting that the signal received by the microphone comprises an ultrasonic signal based, at least in part, on identifying non-zero values of the first data and the second data for one or more corresponding time instances or time periods.

The detecting may comprise performing amplitude envelope correlation using respective waveforms represented by the first data and the second data for generating a first parameter indicative of a similarity between the respective waveforms, and wherein the detection is based, at least in part, on the first parameter.

The detecting may comprise performing spectral analysis of frequency domain representations of respective waveforms represented by the first data and the second data for generating a second parameter indicative of similarity between the frequency domain representations, and wherein the detection is based, at least in part, on the second parameter.

The detecting may be based, at least in part, on the first and second parameters meeting respective predetermined conditions.

The detecting may comprise using one or more machine-learned models trained using training data comprising predetermined sets of first and second parameters known to be generated responsive to ultrasonic signals being transmitted to the user device, wherein the detection is based on an output of the one or more machine-learned models.

The user device may comprise one of a digital assistant, smartphone, tablet computer, smart speaker, smart glasses, other smart home appliance, head-worn display device, an earphone or a hearing aid.

The user device may comprise an earphone, wherein the microphone is provided on an external part of the earphone and a second microphone is provided on an internal part of the earphone, wherein the method may further comprise: providing third data derived from a signal received by the second microphone; and determining a third parameter indicative of an energy ratio between waveforms represented by the first and third data, wherein the detection is based, at least in part, on the third parameter and one or both of the first and second parameters.

The detecting may be based, at least in part, on the third parameter and one or both of the first and second parameters meeting respective predetermined conditions.

The detecting may comprise using one or more machine-learned models trained using training data comprising predetermined sets of third parameters and one or both of first and second parameters known to be generated responsive to ultrasonic signals being transmitted to the user device, wherein the detection is based on an output of the one or more machine-learned models.

The second data may represent mechanical oscillations with respect to two or more axes of the gyroscope.

The gyroscope may comprise part of an inertial measurement unit, IMU, of the user device.

The controlling may comprise performing one or more of:
disabling one or more loudspeakers of the user device;
muting or attenuating an output signal to one or more loudspeakers of the user device, wherein the output signal is derived from at least some of the first data;
disabling a processing function of the user device that receives as input at least some of the first data; and
disabling a transmission function of the user device that transmits at least some of the first data.

The method may be performed by the user device or a different apparatus remote from the user device.

According to a third aspect, there is described a computer program comprising instructions for causing an apparatus to perform at least the following: providing first data derived from a signal received by a microphone of a user device; providing second data representing mechanical oscillations within a gyroscope of the user device; detecting, based at least in part on the first data and the second data, that the signal received by the microphone comprises an ultrasonic signal; and responsive to the detection, controlling the user device for mitigating one or more events associated with receipt of the ultrasonic signal by the microphone.

The third aspect may also comprise any feature of the second aspect.

According to a fourth aspect, this specification describes a computer-readable medium (such as a non-transitory computer-readable medium) comprising program instructions stored thereon for performing at least the following: providing first data derived from a signal received by a microphone of a user device; providing second data representing mechanical oscillations within a gyroscope of the user device; detecting, based at least in part on the first data and the second data, that the signal received by the microphone comprises an ultrasonic signal; and responsive to the detection, controlling the user device for mitigating one or more events associated with receipt of the ultrasonic signal by the microphone.

The fourth aspect may also comprise any feature of the second aspect.

According to a fifth aspect, this specification describes an apparatus comprising: at least one processor; and at least one memory including computer program code which, when executed by the at least one processor, causes the apparatus to: provide first data derived from a signal received by a microphone of a user device; provide second data representing mechanical oscillations within a gyroscope of the user device; detect, based at least in part on the first data and the second data, that the signal received by the microphone comprises an ultrasonic signal; and responsive to the detection, control the user device for mitigating one or more events associated with receipt of the ultrasonic signal by the microphone.

The fifth aspect may also comprise any feature of the second aspect.

### Drawings

FIG. 1 is a perspective view of an first example user device, being a digital assistant, which may be used in example embodiments;
FIG. 2 is a perspective view of a second example user device, being a set of earphones, which may be used in example embodiments;
FIG. 3 is a schematic diagram of components of a left-hand earphone of the set of earphones shown in FIG. 2, which may be useful for understanding example embodiments;
FIG. 4 is a schematic diagram of components of an apparatus according to one or more example embodiments;
FIG. 5 is a schematic diagram of an example gyroscope, which may be used as one of the FIG. 4 components;
FIG. 6 is a graph showing waveforms representing gyro data from a gyroscope which may be indicative of an ultrasonic attack;
FIG. 7 is a flow diagram showing operations that may be performed according to one or more example embodiments;
FIG. 8 is a block diagram showing an example method, by use of a controller component, for detecting an ultrasonic attack according to one or more example embodiments;
FIG. 9 is a block diagram showing another example method, by use of a controller component, for detecting an ultrasonic attack according to one or more example embodiments;
FIG. 10 is a block diagram showing another example method, by use of a controller component, for detecting an ultrasonic attack according to one or more example embodiments;
Fig. 11 is a schematic block diagram of an apparatus according to one or more example embodiments; and
Fig. 12 is a non-transitory medium for storing computer-readable instructions which, when executed or processed by one or more processors of an apparatus, may perform operations according to one or more example embodiments.

### Detailed Description

Example embodiments relate to detection of ultrasonic signals.

For example, example embodiments may relate to an apparatus, method and computer program for detecting ultrasonic signals which may be intended to cause an unwanted event or output by a user device. This may be referred to as an "ultrasonic attack."

The apparatus may itself comprise the user device and the method described herein may be performed by the user device. However, in some cases, the apparatus may be a different entity than the user device, e.g. a smartphone, tablet computer or other computer system in communication with the user device which performs operations described herein.

A user device may be any apparatus that comprises one or more microphones and may be used, e.g. interacted with and/or carried, by one or more users. Examples may include smartphones, tablet computers, wearable computers, digital assistants, hearing aids and one (or a pair) of earphones. The term earphones also covers earbuds and headphones.

It will be known that some earphones comprise at least one microphone that may be used as part of an active noise cancellation (ANC) system. Sometimes, earphones comprise two or more microphones, e.g. one external and one internal, for providing advanced methods of ANC. Sometimes, earphones may operate in a so-called transparency mode in which at least some external sounds received by the microphone are passed-through to a loudspeaker of the earphone so that the user can hear part of their environment.

An ultrasonic attack may involve some external entity transmitting unwanted content encoded or modulated onto an ultrasonic carrier signal (above 20 kHz).

The unwanted content may be for malicious purposes, for example to disturb a user, play unsolicited advertisements, control some aspect of a voice-responsive system, e.g. a smart speaker or digital assistant and/or to initiate communications with one or more external systems. For example, the unwanted content may comprise one or more commands that will cause a digital assistant to effect a digital payment.

Due to non-linearities inherent in one or more components of user devices, the ultrasonic signal received by a microphone of the user device gets down-shifted in the frequency domain to the audio range (usually between 20 Hz and 20 kHz). Here, a "derived signal" that results from the non-linearities may be handled or otherwise processed as if an audio signal. For example, the derived signal may be handled or processed by one or more audio-handling functional components, e.g. amplifiers, ANC processors, digital assistant processors, a system-on-chip providing such functions, and so on.

Non-linearities are often present in pre-amplifiers and/or analog-to-digital convertors (ADCs) located between the microphone and audio-handling functional components.

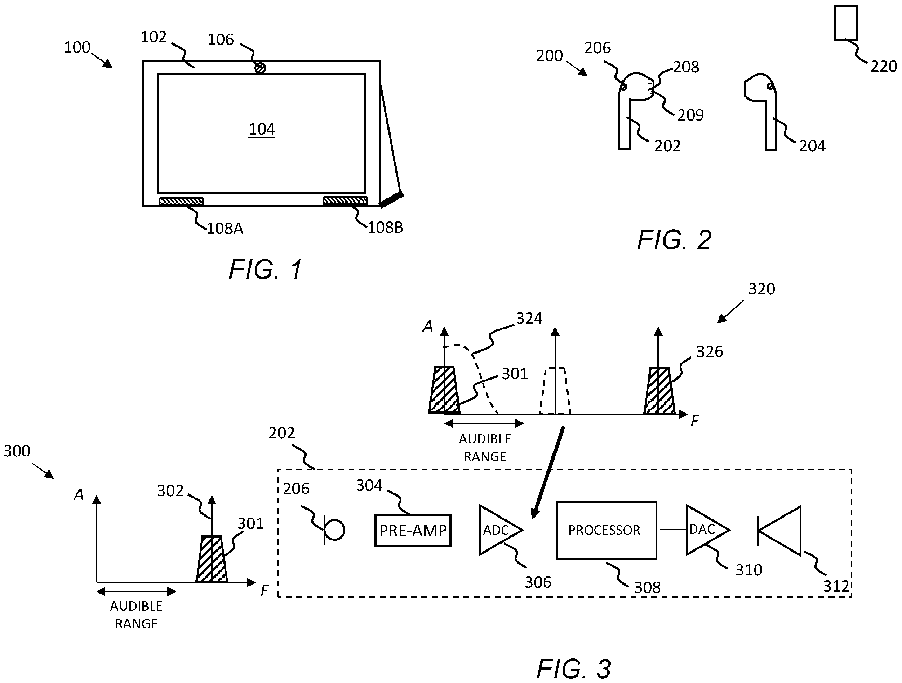

FIG. 1 shows an example user device in the form of a digital assistant 100. The digital assistant 100 may comprise a body 102, a display screen 104 (which may or may not be touch sensitive), a microphone 106 and first and second loudspeakers 108A, 108B. The digital assistant 100 may comprise processing circuitry or functionality for receiving and processing signals received by the microphone 106.

For example, the digital assistant 100 may comprise processing functionality for detecting one or more spoken utterances in an audio signal. The one or more spoken utterances may be processed to perform one or more actions. Some actions may be offline actions, not requiring communication with one or more remote devices over a network. An example of an offline action may be informing a user of the current date and/or time based on a spoken request. Some actions may be online actions, requiring communication with one or more remote devices over a network in order to receive the required data. For example, a spoken utterance may request images, video or music from a remote device or server for playback by the digital assistant 100. Image and video data may be output using the display screen 104 and audio data may be output using the first and second loudspeakers 108A, 108B.

The digital assistant 100 may comprise one or more communication modules for processing online actions. Example communication modules may operate according to radio access network (RAN) standards, such as 3G, 4G, 5G or future generation standards. Alternatively, or additionally, there may be a communication module for WiFi communication or similar. Alternatively, or additionally, there may be a communication module for short-range communication using, for example, Bluetooth or Zigbee.

FIG. 2 shows another example user device in the form of a pair of earphones 200.

The pair of earphones 200 comprises a left and right -hand earphone 202, 204. The left-hand earphone 202 may comprise one or more external microphones 206 on a first side and a loudspeaker 208 located partly within a channel 209 on a second side. An internal microphone (not shown) may also be provided within the channel 209 for enhanced ANC processing in some cases.

Identical components may be provided on the right-hand earphone 204, although not necessarily.

At least one of the pair of earphones 200, in this case the left-hand earphone 202, may comprise processing circuitry for receiving and processing signals received by the external microphone 206. For example, the left-hand earphone 202 may comprise processing functionality for handling or processing data derived from the received signals, for example by performing ANC, in which a cancellation signal may be output to the loudspeaker 208, or by providing a filtered or amplified version of the received signals to the loudspeaker.

The processing functionality may be performed locally, for example by one or more controllers on the left-hand earphone 202 and/or at least some processing functionality may be performed by an external apparatus, e.g. a smartphone 220. The smartphone 220 may be in communication with the pair of earphones 200 using any of the above communication modules and standards.

FIG. 3 is a schematic diagram of the left-hand earphone 202 which may be useful for understanding example embodiments. The same components and operations may be provided and performed by the right-hand earphone 204.

Components of the left-hand earphone 202 are shown in a dashed box. The left-hand earphone 202 may comprise the external microphone 206, a pre-amplifier 304, an ADC 306, a processor 308, a digital-to-analog convertor (DAC) 310 and the loudspeaker 208. The processor 308 may comprise the above-mentioned processing circuitry or provide such functionality.

Reference numeral 300 shows a frequency domain representation of an ultrasonic signal transmitted to the left-hand earphone 202. The ultrasonic signal is represented by a band 301 centred on a frequency 302 outside of the audible range (above 20 kHz). The ultrasonic signal will not be heard by a user of the pair of earphones 200 and serves no intended purpose to the user; it may be a form of ultrasonic attack mentioned above. As shown at the output of the ADC 306, non-linearities inherent in one or more of the pre-amplifier 304 and the ADC may cause down-shifting of components of band 301 to be within the audible range, below 20 kHz. If within a low-pass filter response 324 prior to the processor 308, this derived version of the ultrasonic signal may be treated by the processor 308 as a legitimate audio input. This audio input may be used for performance of ANC, filtering and/or amplification to the loudspeaker 312.

Example embodiments aim to prevent or at least mitigate events associated with receipt of ultrasonic signals by one or more microphones, such as the microphone 106 of the digital assistant 100 in FIG. 1 or the external microphone 206 of the left-hand earphone 202 in FIG. 2.

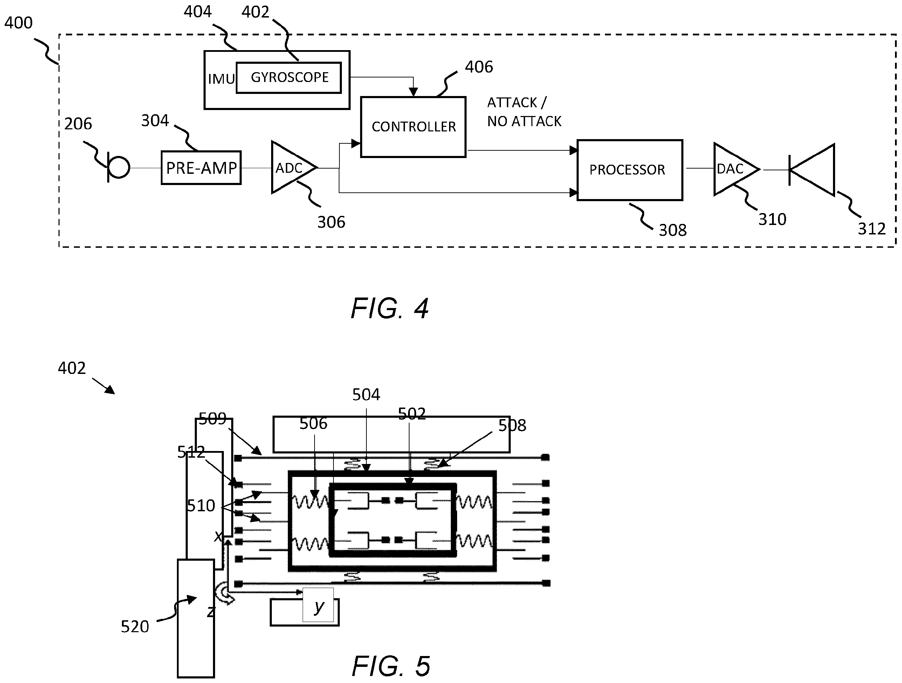

FIG. 4 is a schematic diagram of an apparatus 400 according to some example embodiments.

The apparatus 400 may be similar to that of the left-hand earphone 202 shown in FIG. 3 in that it comprises a microphone 206, a pre-amplifier 204, an ADC 306, a processor 308, a DAC 310 and a loudspeaker 312.

The apparatus 400 may further comprise a gyroscope 402 which may be provided as part of an inertial measurement unit (IMU) 404 of the apparatus. As will be known, many user devices, including smartphones and tablet computers, comprise IMUs for measuring parameters such as force, angular rate and orientation of the smartphone. Other components that may be found in an IMU include an accelerometer and a magnetometer.

The gyroscope 402 may generate gyro data representing mechanical oscillations within the or each gyroscope, which mechanical oscillations, it has been found, may at least in part represent sensing of ultrasonic signals in the environment.

A controller 406 may be configured to receive first data derived from a signal received by the microphone 206, i.e. subsequent to handling or processing by the pre-amplifier 204 and ADC 306. The controller 406 may also be configured to receive second data, being gyro data, representing mechanical oscillations within the gyroscope 402. The controller 406 may be configured to detect, based at least in part on the first data and the second data, whether the signal received by the microphone 206 comprises an ultrasonic signal. If so, then the signal is considered to represent an ultrasonic attack and appropriate mitigating action(s) may be performed. The controller 406 may, for example, output a control signal indicative of an attack/no attack detection, to the processor 308 which takes appropriate mitigating action(s) responsive to an attack detection.

In some embodiments, the controller 406 may comprise part of the processor 308 or may be a separate entity, which comprises one or more controllers and/or one or more processors or equivalents thereof.

The gyroscope 402 may be a MEMS gyroscope.

FIG. 5 is a schematic view of the gyroscope 402 which comprises a resonating mass 502, a sensing frame 504, a plurality of driving springs 506 between the resonating mass and sensing frame, and a plurality of sensing springs 508 connected to outer lines 509. Connected to the sensing frame 504 are a plurality of Coriolis sensing fingers 510 interposed between terminals 512. MEMs gyroscopes may have different forms and the FIG. 5 schematic is an example.

In general, gyroscopes are devices that can measure the angle of orientation or the angular rate of rotation of a body. The principle relies on the resonating mass 502 suspended in such a way that Coriolis forces can be sensed as the resonating mass undergoes rotation relative to an inertial space.

As such, a gyroscope, such as the gyroscope 402 shown in FIG. 5, usually comprises movable parts in at least two orthogonal directions to generate Coriolis force.

In a driving direction, axis y in this case, the driving springs 506 use a sinusoidal voltage to cause the resonating mass 502 to oscillate at its natural frequency. The Coriolis sensing fingers 510 move owing to transverse Coriolis force / motion. In a sensing direction, axis x in this case, acceleration leads to a change in capacitance which can be sensed at the terminals 512. This acceleration is similar to angular rate of rotation of the resonating mass 502. The structure of gyroscopes is typically a single-degree-of-freedom system with a high damping ratio ξ. Damping can be ignored a low frequencies and gyroscopes may produce linear results. As frequencies increase, damping becomes dominant and oscillations occur with the characteristics of forced vibration. Because sound waves are pressure waves, it is found that gyroscopes respond to higher-frequency (ultrasonic) signals and not to audio signals; the result is that gyroscopes such as the gyroscope 402 shown in FIG. 5 may be used to detect ultrasonic signals using gyro data.

Reference numeral 520 indicates three axes (x, y, z) for which gyro data can be generated in this case. The y axis is a driving direction, the x axis a sensing direction and the z axis a rate input.

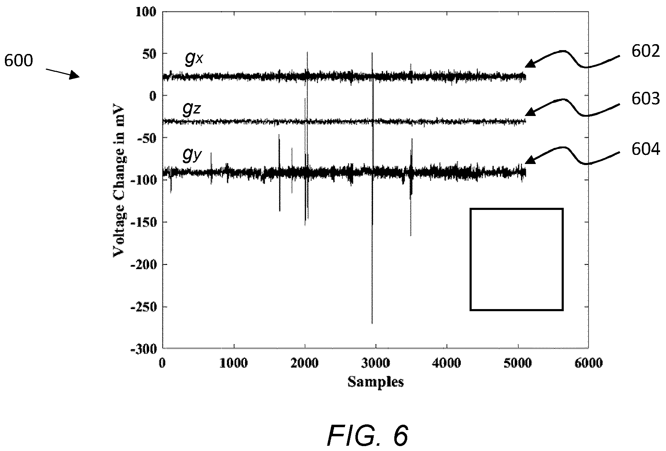

FIG. 6 is a graph 600 showing three waveforms 602, 603, 604 representing gyro data for the above three axes (x, y, z) resulting from exposure of the gyroscope 402 to ultrasonic signals. It is assumed that the body to which the gyroscope 402 (or IMU 404) is mounted, e.g. the apparatus 400, is static. One or more of the three waveforms 602, 603, 604 can be sampled over time to generate the gyro data.

As will be seen, the three waveforms 602, 603, 604 represent sensed mechanical oscillations in all three axes (x, y, z) and that most oscillations, or spikes are present in the third waveform 604 associated with the y axis, or the driving direction. Which of the three waveforms 602, 603, 604 indicates most oscillations depends on a number of factors, including the orientation of the gyroscope 402 on the apparatus 400 and/or the relative direction of the ultrasonic signals arriving at the gyroscope. For this reason, the gyro data that is provided to the controller 406 may comprise only one, two or all three sampled waveforms 602, 603, 604, with two or three waveforms (if used) possibly averaged.

For example, in some embodiments, each of the three waveforms 602, 603, 604 may be monitored to determine which waveform has the most oscillations over a predetermined time frame; it may be this waveform that is sampled and provided to the controller 406 as the gyro data.

For ease of explanation, we may assume that only the third waveform 604 is sampled and used as gyro data.

Returning to FIG. 4, the controller 406 may receive as input first data at the output of the ADC 306 (derived from a signal, if any, received by the microphone 206) and second, gyro data from the gyroscope 402, and determines whether a signal received by the microphone comprises an ultrasonic signal (an attack) or not. How this can be performed is described later on.

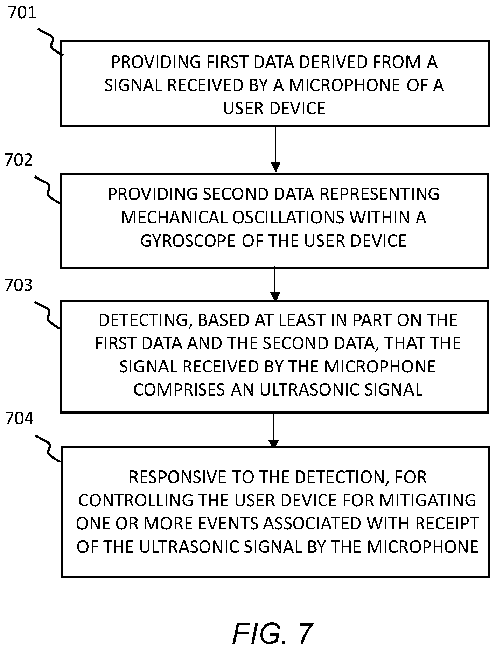

FIG. 7 is a flow diagram indicating processing operations that may be performed by an apparatus, e.g. the apparatus 400 described above, according to one or more example embodiments. The processing operations may be performed by hardware, software, firmware or a combination thereof. The shown order is not necessarily indicative of the order of processing. The apparatus may comprise, or at least include, one or more means for performing the operations, wherein the means may comprise one or more processors or controllers which, when executing computer-readable instructions, may cause said operations to be performed.

A first operation 701 may comprise providing first data derived from a signal received by a microphone of a user device.

A second operation 702 may comprise providing second data representing mechanical oscillations within a gyroscope of the user device.

A third operation 703 may comprise detecting, based at least in part on the first data and the second data, that the signal received by the microphone comprises an ultrasonic signal.

A fourth operation 704 may comprise, responsive to the detection, controlling the user device for mitigating one or more events associated with receipt of the ultrasonic signal by the microphone.

The term providing may mean receiving, generating and/or storing.

As mentioned above, the first data may be provided at the output of one or more non-linear components that process the signal received by the microphone. These may include a pre-amplifier 304, ADC 306 or similar.

The third operation 703 may be performed in a number of ways, some of which will be explained now with reference to the FIG. 4 apparatus 400.

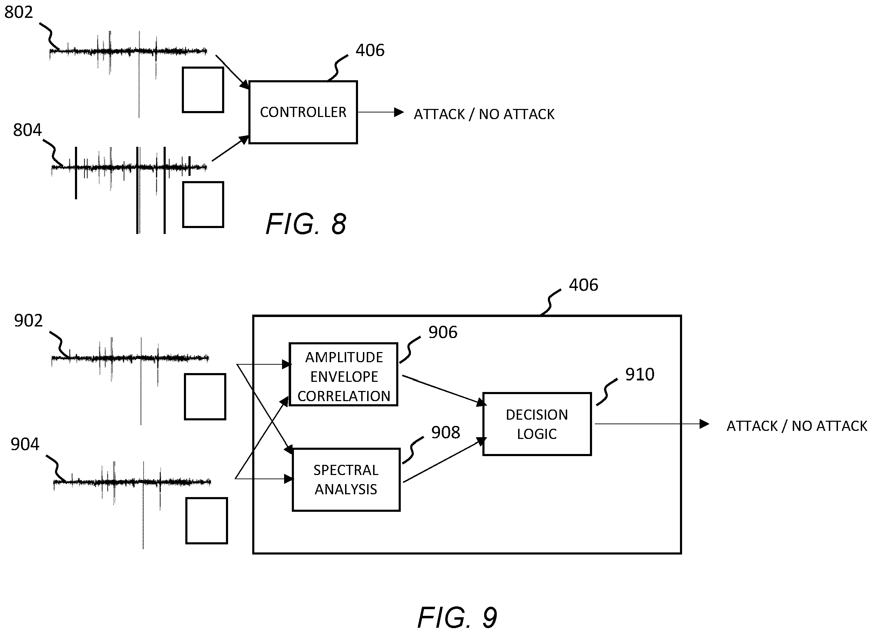

Referring to FIG. 8, the controller 406 may for example detect that the signal received by the microphone 206 is an ultrasonic signal if the first data (indicated by first waveform 802) and the second, gyro, data (represented by second waveform 804) represent non-zero values for one or more corresponding time instances or time periods.

Here, the first and second waveforms 802, 804 for a same time period are slightly different but clearly represent non-zero values over a majority of the time period. This indicates that, by the first data, some signal has been received by the microphone 206 and, by the second, gyro, data that mechanical oscillations within the gyroscope 402 have been detected in the same time period. This may be indicative of ultrasonic signals in the environment. On this basis, it may be determined that the signal received by the microphone 206 is an ultrasonic signal and represents a form of potential ultrasonic attack.

This relatively simple detection example may be appropriate where the apparatus 400 is static and not usually in motion. For example, the digital assistant 100 in FIG. 1 is ordinarily static and sits on a table or work surface.

For cases where the apparatus 400 may be in motion, such as for smartphones, tablet computers, hearing aids and earphones, such as the set of earphones 200 shown in FIG. 2, it is required to distinguish gyro data that may also indicate motion of the apparatus when carried by a user.

In such cases, it may be appropriate to use one or more different detection methods to better discriminate gryo data representing ultrasonic signals from those due to normal motion the apparatus when carried by a user. The use of two or more different detection methods may give more accurate results.

Referring to FIG. 9, the controller 406 may similarly receive first data (represented by waveform 902) and second, gyro, data (represented by waveform 904) and may identify similarity or similarities between the first and second data.

For example, the controller 406 may comprise an amplitude envelope correlation (AEC) module 906. As the name suggests, the AEC module 906 may perform correlation (e.g. cross-correlation) using the first data and the second data, effectively determining a similarity between time-domain envelopes of the waveforms 902, 904 represented by the first data and the second data, to generate a first parameter. The first parameter may be an indication of similarity, e.g. in terms of a ratio or percentage. For example, a value closer to 1 (ratio) or 100% (percentage) may indicate a high similarity and a value closer to zero (ratio) or 0 % may indicate a low similarity.

For example, the controller 406 may additionally, or alternatively, comprise a spectral analysis module 908. The spectral analysis module 908 may perform spectral analysis of frequency domain representations of, in effect, the waveforms 902, 904 represented by the first data and the second data. The spectral analysis module 908 may generate a second parameter indicative of similarity between the frequency domain representations, e.g. in terms of energy levels at baseband and/or one or more harmonics. Similar to the AEC module 906, the second parameter may be an indication of similarity, e.g. in terms of a ratio or percentage. For example, a value closer to 1 (ratio) or 100% (percentage) may indicate a high similarity and a value closer to zero (ratio) or 0 % may indicate a low similarity.

One or both of the AEC module 906 and spectral analysis module 908 may be employed.

The first and/or second parameters respectively generated by the AEC module 906 and/or spectral analysis module 908 may be provided to a decision logic module 910 configured to determine, based on the value(s) of said parameter(s), whether a signal received by the microphone 206 is an ultrasonic signal and may therefore represent a form of ultrasonic attack.

For example, the decision logic module 910 may implement one or more rules. The one or more rules may be based on predetermined threshold values for the first and/or second parameters.

For example, the decision logic module 910 may determine that if the first and/or second parameter is above 0.65 or 65%, then the signal received by the microphone 206 is an ultrasonic signal. For example, the decision logic module 910 may determine that both the first and second parameters need to be above 0.65 or 65% for such a determination. In other examples, the ratios or percentages may be different for the first and second parameters, e.g. 0.75 or 75% for the first parameter and 0.6 or 60% for the second parameter. These values are examples and can be varied as appropriate.

For example, the decision logic module 910 may alternatively comprise one or more machine-learned (ML) models. Any suitable form of ML model may be used, e.g. a generative adversarial network (GAN) or similar. Known deep-learning methods for training and subsequent inference may be used. Embodiments are not limited to any particular form of model or neural network.

The one or more ML models may be trained using training data comprising predetermined sets of first and/or second parameters known to be generated responsive to ultrasonic signals being transmitted to the apparatus 400, or one or more different test apparatuses.

During an inference stage, the one or more ML models may receive as input the first and/or second parameters from the respective AEC module 906 and/or spectral analysis module 908. Based on how the one or more ML models have been trained, an output of the one or more ML models may be a detection classification (ultrasonic signal/attack or no attack).

In another example embodiment, consider an adapted version of the FIG. 4 apparatus 400 in which a second microphone is provided and which is connected to the processor 308 in the same way, i.e. via one or more non-linear components.

The apparatus 400 may, for example, comprise the left-hand earphone 202 shown in FIG. 2.

In addition to the one or more external microphones 206, an internal microphone may be provided within the channel 209 housing the loudspeaker 208. This may be useful for enhanced ANC system processing and/or for transparency mode operation by the processor 308.

In this case, another form of analysis may additionally involve comparing respective energy levels of signals derived from said external and internal microphones for the same time period. A signal derived from an audio signal received at the internal microphone will inevitably have less energy than that at the external microphone due to passive attenuation by the body of the left-hand earphone 202.

This attenuation, or the ratio of the respective energy levels, will generally be known or is measurable. A figure of 20 dB is a realistic example for audio signals.

Where the external and internal microphones receive ultrasonic signals, the attenuation, or the ratio of the respective energy levels, will be much higher because high frequency signals are attenuated to a higher degree by objects such as the body of the left-hand earphone 202.

It follows that an above-threshold attenuation, or ratio of the respective energy levels, can be used (alone or in combination with one or more other methods above) to determine if signals received by at least the external microphone 206 comprise ultrasonic signals.

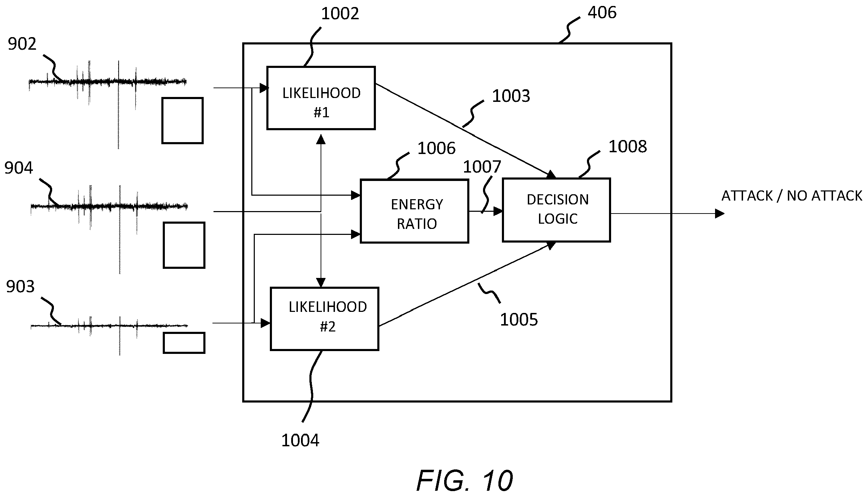

Referring to FIG. 10, the controller 406 in another example embodiment may provide first data (represented by waveform 902) derived from a signal received by the external microphone 206. The controller 406 may also receive second, gyro, data (represented by waveform 904) from the gyroscope 402 for the same time period. The controller 406 may also receive third data (represented by attenuated waveform 903) derived from the same signal received by an internal microphone for the same time period.

A first likelihood module 1002 may receive the first and second, gyro, data. The first likelihood module 1002 may comprise one or both of the ACL module 906 and the spectral analysis module 908 for generating the first and/or second parameters as explained above with reference to FIG. 9, for example as ratios or percentages or an average of ratios or percentages if both first and second parameters are used.

The first likelihood module 1002 may output a first likelihood value 1003 based on the first and/or second parameters to a decision logic module 1008.

A second likelihood module 1004 may optionally be provided. The second likelihood module 1004 may receive the second, gyro, data and the third data. The second likelihood module 1004 may be configured the same as the first likelihood module 1002 but obviously acts on the third data which represents an attenuated version of the first data.

The second likelihood module 1004 may output a second likelihood value 1005 based on the first and/or second parameters to the decision logic module 1008.

An energy ratio module 1006 may receive the first data and the third data and may determine a third parameter 1007 indicative of an energy ratio between waveforms represented by the first and third data. This may be performed by comparison at respective time instances over the time period.

The energy ratio module 1006 may output the third parameter 1007 to the decision logic module 1008.

The decision logic module 1008 may implement one or more rules. The one or more rules may be based on predetermined threshold values for the first likelihood value 1003, the second likelihood value 1005 (if used) and the third parameter 1007.

For example, the decision logic module 1008 may determine that if the first likelihood value 1003 is above 0.65 or 65% and the third parameter 1007 is a ratio above a threshold ratio, e.g. equivalent to 30 dB, then the signal received by the microphone 206 is an ultrasonic signal. For example, the decision logic module 1008 may determine that, in addition to the third parameter 1007 condition, both the first and second likelihood values need to be above 0.65 or 65% for such a determination. These values are examples and can be varied as appropriate.

For example, the decision logic module 1008 may alternatively comprise one or more machine-learned (ML) models. Any suitable form of ML model may be used, e.g. a generative adversarial network (GAN) or similar. Known deep-learning methods for training and subsequent inference may be used. Embodiments are not limited to any particular form of model or neural network.

The one or more ML models may be trained using training data comprising predetermined sets of first and/or second likelihood values and third parameters known to be generated responsive to ultrasonic signals being transmitted to the apparatus 400, or one or more different test apparatuses. During an inference stage, the one or more ML models may receive as input the first and/or second likelihood values and the third parameter from the respective first likelihood module 1002, second likelihood module 1004 and energy ratio module 1006. Based on how the one or more ML models have been trained, an output of the one or more ML models may be a detection classification (ultrasonic signal/attack or no attack).

Referring to the fourth operation 704, the controller 406 or the processor 308 may control the apparatus 400 for mitigating one or more events associated with receipt of the ultrasonic signal by the microphone 206.

Said controlling may comprise one or more of: disabling one or more loudspeakers 312 of the apparatus; muting or attenuating an output signal to one or more loudspeakers of the apparatus (wherein the output signal is derived from at least some of the first data); disabling a processing function of the apparatus that receives as input at least some of the first data; and/or disabling a transmission function of the apparatus that transmits at least some of the first data.

As mentioned above, the apparatus 400 may comprise a user device configured to perform the operations 701 - 704 described with reference to FIG. 4. Alternatively, the operations 701 - 704 may be performed by an apparatus other than the user device which comprises at least the microphone 206 and the gyroscope 402. For example, the operations 701 - 704 may be performed by a smartphone separate from a hearing aid or the pair of earphones 200 shown in FIG. 2.

When the apparatus 400 comprises left and right -hand devices, each comprising one or microphones and a gyroscope (such as the pair of earphones 200 shown in FIG. 2 assuming the right-hand earphone 204 comprises the same functionality as the left-hand earphone 202) it may be that each of the left and right -hand devices may work or be controlled independently. For example, if an ultrasonic attack is detected by both devices with equal characteristics, the same or similar mitigation operations described above may be used. On the other hand, if an ultrasonic attack comes from an angle which is one side more than the other, different mitigation operations may be used for the different devices. Detecting such situations may use known microphone beamforming methods or similar (e.g. correlation and/or delay calculations). If the left-hand device detects an ultrasonic attack, and not the right-hand device, then the mitigation operation may be used for that left-hand device and not necessarily (or with reduced amount) for the right-hand device.

Thus, the user device may comprise a left and right -hand entity each comprising one or more microphones, a loudspeaker and a gyroscope, wherein the first and second data is provided for each of the left and right-hand entities, wherein the detecting means is configured to detect that the signal received by a first one of said entities comprises an ultrasonic signal and the signal received by the other, second entity does not, or that the signal received by the first one of said entities comprises a greater amount of ultrasonic signal than the other, second entity. The controlling means is configured to control the first entity differently from the second entity for mitigating the one or more events.

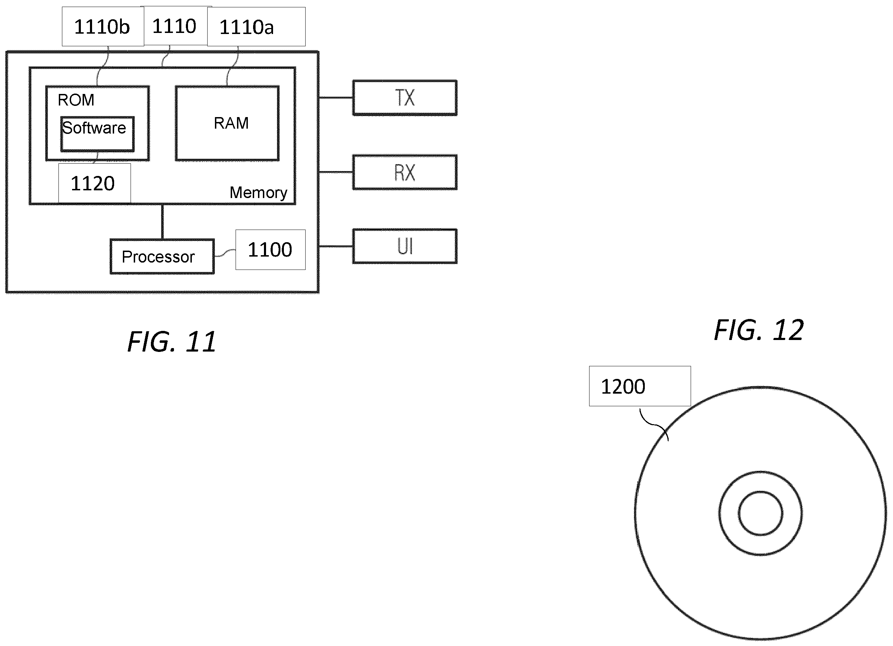

FIG. 11 shows, in overview, a schematic representation of an apparatus according to an embodiment, which may comprise the apparatus described herein. The apparatus may be configured to perform the operations described herein, for example operations described with reference to any preceding process. The apparatus comprises at least one processor 1100 and at least one memory 1110 directly or closely connected to the processor. The memory 1110 includes at least one random access memory (RAM) 1110a and at least one read-only memory (ROM) 1110b. Computer program code (software) 1120 is stored in the ROM 1110b. The apparatus may be connected to a transmitter (TX) and a receiver (RX). The apparatus may, optionally, be connected with a user interface (UI) for instructing the apparatus and/or for outputting data. The at least one processor 1100, with the at least one memory 1110 and the computer program code 1120 are arranged to cause the apparatus to at least perform at least the method according to any preceding process by executing the computer program code.

FIG. 12 shows a non-transitory media 1200 according to some embodiments. The non-transitory media 1200 is a computer readable storage medium. It may be e.g. a CD, a DVD, a USB stick, a blue ray disk, etc. The non-transitory media 1200 stores computer program code, causing an apparatus to perform the method of any preceding process by the apparatus executing the computer program code.

Any mentioned apparatus and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

In some examples, a particular mentioned apparatus may be pre-programmed with the appropriate software to carry out desired operations, and wherein the appropriate software can be enabled for use by a user downloading a "key", for example, to unlock/enable the software and its associated functionality. Advantages associated with such examples can include a reduced requirement to download data when further functionality is required for a device, and this can be useful in examples where a device is perceived to have sufficient capacity to store such pre-programmed software for functionality that may not be enabled by a user.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

## Claims

1. An apparatus, the apparatus comprising:
means for providing first data derived from a signal received by a microphone of a user device;
means for providing second data representing mechanical oscillations within a gyroscope of the user device;
means for detecting, based at least in part on the first data and the second data, that the signal received by the microphone comprises an ultrasonic signal; and
means, responsive to the detection, for controlling the user device for mitigating one or more events associated with receipt of the ultrasonic signal by the microphone.

2. The apparatus of claim 1, wherein the first data is provided at the output of one or more non-linear components that process the signal received by the microphone.

3. The apparatus of claim 1 or claim 2, wherein the detecting means is configured to detect that the signal received by the microphone comprises an ultrasonic signal based, at least in part, on identifying non-zero values of the first data and the second data for one or more corresponding time instances or time periods.

4. The apparatus of any preceding claim, wherein the detecting means is configured to perform amplitude envelope correlation using respective waveforms represented by the first data and the second data for generating a first parameter indicative of a similarity between the respective waveforms, and wherein the detection is based, at least in part, on the first parameter.

5. The apparatus of any preceding claim, wherein the detecting means is configured to perform spectral analysis of frequency domain representations of respective waveforms represented by the first data and the second data for generating a second parameter indicative of similarity between the frequency domain representations, and wherein the detection is based, at least in part, on the second parameter.

6. The apparatus of claim 4 and claim 5, wherein the detection is based, at least in part, on the first and second parameters meeting respective predetermined conditions.

7. The apparatus of claim 4 or claim 5, wherein the detecting means comprises one or more machine-learned models trained using training data comprising predetermined sets of first and second parameters known to be generated responsive to ultrasonic signals being transmitted to the user device, wherein the detection is based on an output of the one or more machine-learned models.

8. The apparatus of any preceding claim, wherein the user device comprises one of a digital assistant, smartphone, tablet computer, smart speaker, smart glasses, other smart home appliance, head-worn display device, an earphone or a hearing aid.

9. The apparatus of claim 8 when dependent on claim 4 or claim 5, wherein the user device comprises an earphone, wherein the microphone is provided on an external part of the earphone and a second microphone is provided on an internal part of the earphone, wherein the apparatus further comprises:
means for providing third data derived from a signal received by the second microphone; and
means for determining a third parameter indicative of an energy ratio between waveforms represented by the first and third data,
wherein the detection is based, at least in part, on the third parameter and one or both of the first and second parameters.

10. The apparatus of claim 9, wherein the detection is based, at least in part, on the third parameter and one or both of the first and second parameters meeting respective predetermined conditions.

11. The apparatus of claim 9, wherein the detecting means comprises one or more machine-learned models trained using training data comprising predetermined sets of third parameters and one or both of first and second parameters known to be generated responsive to ultrasonic signals being transmitted to the user device, wherein the detection is based on an output of the one or more machine-learned models.

12. The apparatus of any preceding claim, wherein the second data represents mechanical oscillations with respect to two or more axes of the gyroscope.

13. The apparatus of any preceding claim, wherein the controlling means is configured to perform one or more of:
disabling one or more loudspeakers of the user device;
muting or attenuating an output signal to one or more loudspeakers of the user device, wherein the output signal is derived from at least some of the first data;
disabling a processing function of the user device that receives as input at least some of the first data; and
disabling a transmission function of the user device that transmits at least some of the first data.

14. The apparatus of any preceding claim, wherein the apparatus comprises the user device.

15. A method, comprising:
providing first data derived from a signal received by a microphone of a user device;
providing second data representing mechanical oscillations within a gyroscope of the user device;
detecting, based at least in part on the first data and the second data, that the signal received by the microphone comprises an ultrasonic signal; and
responsive to the detection, controlling the user device for mitigating one or more events associated with receipt of the ultrasonic signal by the microphone.
